# FASCICULE DE BREVET EUROPEEN

(11) **EP 3 774 305 B1**
(45) Date de publication et mention de la délivrance du brevet: **07.01.2026**
(21) Numéro de dépôt: 19720933.1
(22) Date de dépôt: 25.03.2019
(51) Int. Cl.: B29C 70/24, B29C 70/38, B29C 70/20, D04H 3/105, B29B 11/16

(54) **PROCÉDÉ DE RÉALISATION D'UNE PIÈCE EN MATÉRIAU COMPOSITE PAR AIGUILLETAGE DE SOUS-ENSEMBLES DE PLIS**
VERFAHREN ZUR HERSTELLUNG EINES TEILS AUS EINEM VERBUNDWERKSTOFF DURCH VERNADELN VON UNTERMENGEN VON LAGEN
METHOD FOR PRODUCING A PART MADE OF A COMPOSITE MATERIAL BY NEEDLING SUB-SETS OF PLIES

(30) Priorité: 28.03.2018 FR 1800245
(43) Date de publication de la demande: 17.02.2021
(73) Titulaire: Coriolis Group, 56530 Quéven (FR)
(72) Inventeur: HAMLYN, Alexander, 56270 Ploemeur (FR); JOB, Sophie, 56690 Nostang (FR)
(86) Numéro de dépôt international: PCT/FR2019/000038
(87) Numéro de publication internationale: WO 2019/185997

(56) Documents cités:
- WO-A1-98/53978
- WO-A2-2004/041528
- US-B1- 6 585 842

## Description

La présente invention concerne un procédé de réalisation de pièces en matériau composite à matrice organique, appelé également matériau composite à matrice polymère, comprenant des fibres continues et une matrice polymère.

Il est connu des procédés de réalisation de pièces en matériau composite à matrice polymère, comprenant une étape de réalisation d'une préforme sèche initiale, et une étape d'imprégnation de la préforme sèche avec un polymère d'imprégnation, par exemple par injection et/ou infusion, pour former une pièce en matériau composite.

Les préformes sèches sont classiquement réalisées manuellement à partir de tissus formés par tissage de fibres sèches continues unidirectionnelles, ou à partir de tissus multiaxiaux ou tissus NCF (Non Crimp Fabric) comprenant plusieurs plis superposés de fibres unidirectionnelles continues maintenus ensemble par couture. Ces préformes présentent un coût de fabrication élevé, et les taux de chute lors de la réalisation de pièces à partir de tels tissus préfabriqués s'avèrent importants.

Afin d'automatiser les opérations et limiter le taux de chute, il a été proposé de réaliser des préformes sèches par drapage automatique de fibres unidirectionnelles continues, les préformes résultantes comprenant plusieurs plis superposés de fibres unidirectionnelles continues. Les fibres peuvent par exemple être appliquées au contact, au moyen d'un rouleau, par un procédé de placement de fibres, chaque pli étant formé par drapage sur un moule d'une ou plusieurs bandes jointives, chacune formée d'une ou plusieurs fibres plates, de type ruban, telles que des fibres de carbone constituées d'une multitude de fils ou filaments de carbone. Les préformes sèches comprennent une faible quantité de liant, généralement inférieure à 5 %, permettant de maintenir la cohésion de la préforme. Toutefois, ce type de préforme obtenue par drapage de plis superposés peut présenter une perméabilité et une cohésion entre fibres insuffisantes pour permettre une imprégnation rapide et satisfaisante, notamment dans le cas d'une imprégnation par injection RTM (Resin Transfert Molding) à haute pression et haute température.

Par ailleurs, il a été proposé dans la demande de brevet FR16/70556, déposée le 27 septembre 2016, un procédé de réalisation de pièces en matériau composite comprenant une étape d'application de filaments non tissés sur une première face principale de la préforme sèche et une étape d'aiguilletage desdits filaments au moyen d'un dispositif d'aiguilletage comprenant une pluralité d'aiguilles, chacune munie d'au moins une encoche, de sorte que des filaments soient entraînés par les aiguilles et disposés dans une direction sensiblement perpendiculaire aux fibres continues de la préforme sèche. Ce procédé permet de proposer de nouvelles préformes sèches présentant une excellente cohésion pour leur traitement ultérieur, et une excellente perméabilité. Un procédé similaire comprenant l'aiguilletage de préformes munies du ou des polymères constituant la matrice polymère de la pièce finale a également été proposé dans la demande de brevet FR17/70331, déposée le 3 avril 2017.

Le document US6585842 décrit un procédé de réalisation d'une nappe multiaxiale dans lequel des nappes unidirectionnelles formées de fibres continues sont superposées puis aiguilletées, un voile de fibres discontinues pouvant être apporté sur la nappe multiaxiale avant aiguilletage. Les nappes multiaxiales obtenues peuvent être utilisées pour la réalisation de renforts par des techniques de drapage ou d'aiguilletage de strates superposées. Les renforts peuvent alors être densifiés par une matrice obtenue par imprégnation.

Le document WO98/53978 décrit une nappe comprenant une couche primaire comprenant au moins deux sous-couches chacune formée de fibres de verre continues, et une couche secondaire formée de fibres de verre continues et/ou discontinues, la couche primaire et la couche secondaire étant aiguilletées. Plusieurs nappes comprenant chacune une couche primaire et une couche secondaire peuvent être empilées avant l'opération d'aiguilletage, et être imprégnée avec une matrice polymère.

Le document WO2004/041528 décrit l'application d'une couche de fibres discontinues sur une préforme formée de plusieurs couches de fibres continues, et l'aiguilletage de la couche de fibres discontinues. Plusieurs préformes peuvent être assemblées ensemble en effectuant un aiguilletage d'une couche de fibres discontinues appliquée au niveau d'une zone où les préformes se superposent. Les préformes assemblées peuvent ensuite être soumises à une opération d'infusion avec une résine.

Le but de la présente invention est de proposer un perfectionnement aux procédés décrits dans les demandes de brevets précitées.

A cet effet, la présente invention a pour objet un procédé de réalisation d'une pièce en matériau composite comprenant des fibres continues et une matrice polymère, tel que défini dans la revendication 1.

Selon l'invention, la réalisation de la préforme comprend au moins deux étapes d'aiguilletage, ce qui permet d'obtenir plus facilement des préformes aiguilletées d'épaisseur importante comprenant un nombre important de plis, les préformes aiguilletées pouvant présenter une épaisseur constante importante, ou une épaisseur variable avec une ou plusieurs zones d'épaisseur importante.

Les aiguilles sont entraînées dans un mouvement de va-et-vient par un système d'entrainement du dispositif d'aiguilletage, pour traverser les sous-ensembles de plis, de préférence de part en part. Lors du mouvement des aiguilles en direction d'un sous-ensemble de plis , au moins une partie de ces filaments se positionnent dans les encoches des aiguilles et sont entraînés par les aiguilles à travers le sous-ensemble de plis. Ces filaments aiguilletés positionnés dans la direction Z, dans l'épaisseur des sous-ensembles de plis, stabilisent les sous-ensembles et permettent d'augmenter la cohésion de la préforme pour la ou les étapes ultérieures de traitement de la préforme, notamment d'éviter un délaminage ou un déplacement non souhaité de fibres lors d'une étape d'imprégnation ou une étape de formage ultérieure.

Les fibres continues, de préférence appliquées par placement de fibres, sont de préférence des fibres continues unidirectionnelles, par exemple des fibres de carbone, des fibres de verre, des fibres synthétiques telles que des fibres d'aramide, des fibres de polyéthylène, et/ou des fibres naturelles, telles que par exemple des fibres de lin.

Le procédé selon l'invention peut notamment être utilisé pour des préformes sèches telles que décrites dans la demande de brevet FR16/70556 précitée, le procédé comprenant alors une étape de traitement comprenant une étape d'imprégnation de la préforme aiguilletée, et/ou pour des préformes munies du ou des polymères constituant la matrice finale de la pièce tel que décrit dans la demande de brevet FR17/70331 précitée, l'étape de traitement comprenant alors une étape de traitement thermique.

Le procédé selon l'invention peut avantageusement être utilisé pour la réalisation de pièces en matériau composite, notamment dans le domaine de l'automobile ou l'aéronautique.

La préforme comprend au moins deux sous-ensembles de plis, et peut comprendre une pluralité de sous-ensembles pour former l'empilement de plis souhaité. Chaque sous-ensemble comprend au moins deux plis, par exemple de 2 à 20 plis. Dans un même sous-ensemble, les plis peuvent avoir des orientations de fibres différentes ou identiques.

Selon l'invention, la réalisation de la préforme aiguilletée comprend
- la réalisation d'un premier sous-ensemble de plis aiguilleté, comprenant la réalisation d'un premier sous-ensemble de plis superposés, l'application de filaments non tissés sur au moins une première face principale du premier sous-ensemble de plis et l'aiguilletage desdits filaments non tissés,
- la réalisation d'un deuxième sous-ensemble de plis aiguilleté, comprenant la réalisation d'un deuxième sous-ensemble de plis superposés, l'application de filaments non tissés sur au moins une première face principale du deuxième sous-ensemble de plis et l'aiguilletage desdits filaments, et
- l'empilement du deuxième sous-ensemble de plis aiguilleté sur le premier sous-ensemble de plis aiguilleté, et l'aiguilletage de filaments non tissés de sorte que lesdits filaments soient entraînés à travers les fibres continues du deuxième sous-ensemble de plis, sur toute son épaisseur, ainsi qu'à travers les fibres continues du premier sous-ensemble de plis sur uniquement une partie de l'épaisseur du premier sous-ensemble de plis, de manière à garantir une liaison entre les deux sous-ensembles et conférer une cohésion à la préforme aiguilletée pour son traitement ultérieur, pour cet aiguilletage, des filaments peuvent éventuellement être ajoutés au préalable sur le deuxième sous-ensemble, cet aiguilletage pouvant être effectué sur la totalité du deuxième sous-ensemble de plis aiguilleté, ou uniquement sur une ou plusieurs zones localisées,
   ou
- la réalisation d'un premier sous-ensemble de plis aiguilleté, comprenant la réalisation d'un premier sous-ensemble de plis superposés, l'application de filaments non tissés sur au moins une première face principale du premier sous-ensemble de plis, et l'aiguilletage desdits filaments, et
- la réalisation d'un deuxième sous-ensemble de plis superposés sur le premier sous-ensemble de plis aiguilleté, par application de plis directement sur le premier sous-ensemble de plis aiguilleté, par exemple par drapage sur ladite première face du premier sous-ensemble de plis, l'application de filaments non tissés sur le deuxième sous-ensemble de plis, sur la première face du deuxième sous-ensemble de plis qui est opposée au premier sous-ensemble de plis, et l'aiguilletage desdits filaments de sorte que lesdits filaments soient entraînés à travers les fibres continues du deuxième sous-ensemble de plis, sur toute son épaisseur, ainsi qu'à travers les fibres continues du premier sous-ensemble de plis sur uniquement une partie de l'épaisseur du premier sous-ensemble de plis, de manière à garantir une liaison entre les deux sous-ensembles et conférer une cohésion à la préforme aiguilletée pour son traitement ultérieur.

Selon un mode de réalisation, l'aiguilletage de filaments à travers les fibres continues d'un sous-ensemble de plis est effectué en présence d'un agent lubrifiant, appelé également agent de lubrification, pour réduire les frottements entre les aiguilles et les fibres continues, et ainsi de réduire les ruptures de fibres continues dues aux frottements. Les aiguilles pénètrent mieux à travers les plis et le transfert de filaments à travers les plis est ainsi amélioré. Par ailleurs, en cas de rupture de fibres, l'agent lubrifiant limite, voir supprime, la dispersion des fibrilles générées, l'agent lubrifiant piégeant les fibrilles dans la préforme, par simple capillarité et/ou en raison des fibrilles qui sont alourdies par l'agent lubrifiant.

Selon différents modes de réalisation,
- l'agent lubrifiant comprend de l'eau, éventuellement de l'eau déminéralisée ou distillée, ou de l'eau savonneuse ; et/ou
- chaque sous-ensemble est humidifié avant l'étape d'aiguilletage, le sous-ensemble de plis comprend au moins 2% en poids d'eau, de préférence au moins 5% en poids d'eau, de préférence de 5 à 40% en poids d'eau, mieux encore de 10% à 40% en poids d'eau ; et/ou
- l'agent lubrifiant est appliqué sur le sous-ensemble de plis et/ou les filaments non tissés, avant l'opération d'aiguilletage, par exemple par pulvérisation ; et/ou
- le procédé comprend une étape de séchage de chaque sous-ensemble de plis aiguilleté avant empilement, et/ou de la préforme aiguilletée, par exemple par séchage mécanique par pressage combiné éventuellement à une aspiration, et/ou par passage dans une étuve ou un four, et/ou par séchage par infrarouge, par radiofréquences ou par micro-ondes.

Selon un mode de réalisation, chaque aiguilletage est réalisé au moyen d'aiguilles à fourche présentant chacune à son extrémité distale au moins une encoche, de préférence une seule encoche. L'aiguilletage est réalisé au moyen d'aiguilles à fourche, de préférence avec une profondeur de pénétration d'aiguille comprise entre 1 et 10 mm, de préférence entre 2 et 6 mm. L'utilisation d'aiguilles à fourche permet d'obtenir un aiguilletage efficace des filaments, sans détérioration des fibres continues.

Selon un mode de réalisation, le procédé comprend la réalisation d'une préforme aiguilletée sèche, les plis de chaque sous-ensemble de plis étant formés à partir de fibres continues sèches, ledit procédé comprenant, après l'étape d'aiguilletage, une étape de traitement comprenant une étape d'imprégnation de la préforme aiguilletée sèche avec un polymère d'imprégnation formant la matrice polymère. Selon un mode de réalisation, chaque sous-ensemble de plis est formé à partir de fibres continues sèches munies d'un liant, ledit liant comprenant un premier polymère, pour assurer une liaison des différents plis du sous-ensemble. La préforme sèche comprend moins de 10% en poids de liant, de préférence moins de 5% en poids de liant.

Dans le cas d'une telle préforme aiguilletée sèche, les filaments aiguilletés positionnés dans la direction Z, dans l'épaisseur, stabilisent la préforme et permettent d'augmenter la cohésion de la préforme sèche pour l'étape ultérieure d'imprégnation, et ainsi d'éviter un délaminage de la préforme lors de l'imprégnation, notamment dans le cas d'injection de polymère d'imprégnation. Par ailleurs, les perforations créées par les aiguilles et les filaments aiguilletés positionnés en Z augmentent la perméabilité en Z de la préforme sèche, dans l'épaisseur de la préforme. L'imprégnation est ainsi facilitée et peut être effectuée à des cadences élevées, sans zones sèches, et sans détérioration de la préforme. A l'issue de l'étape d'imprégnation, la pièce en matériau composite comprend au moins 30% en poids de polymère d'imprégnation, le polymère d'imprégnation constituant la matrice de la pièce en matériau composite. L'étape d'imprégnation peut consister en une étape d'injection de la préforme sèche placée dans un moule d'injection. L'étape d'imprégnation peut par exemple être réalisée selon un procédé d'imprégnation par voie humide, un procédé d'infusion sous vide, un procédé LCM, un procédé RTM, HP-RTM, Gap-RTM ou VARTM. Selon un mode de réalisation, l'étape d'imprégnation consiste en une étape d'injection de la préforme sèche placée dans un moule d'injection, l'injection étant réalisée à une pression d'au moins 10 bars, par exemple de l'ordre de 50 bars.

Selon un autre mode de réalisation, les fibres sont munies d'une quantité de premier polymère suffisante pour former la matrice finale, le premier polymère pouvant être un polymère thermodurcissable ou thermoplastique, par exemple sous forme de poudre, d'un ou plusieurs voiles et/ou de fils. Lors du drapage, le premier polymère est chauffé pour assurer une liaison des différents plis. Après aiguilletage, la préforme est soumise à une opération de chauffage éventuellement combinée à une opération de formage pour chauffer l'ensemble du premier polymère et créer la matrice.

Selon une variante de réalisation, les fibres continues sont munies d'un deuxième polymère, formant avec le premier polymère la matrice ou constituant un liant, le drapage étant réalisé en appliquant un chauffage pour chauffer le deuxième polymère afin de le rendre collant, le premier polymère restant peu ou pas collant.

Dans le cas d'un deuxième polymère formant la matrice, la matrice est formée d'une partie majoritaire de premier polymère, le deuxième polymère formant par exemple jusqu'à 20% en poids de la matrice. Le deuxième polymère peut se présenter sous une forme de poudre, de voile(s) et/ou de fils, et être présent avec le premier polymère sur les fibres avant la réalisation de la préforme.

Dans le cas d'un deuxième polymère constituant un liant, les préformes sont obtenues par application de fibres munies du premier polymère et du liant et/ou par application de fibres munies uniquement du premier polymère, et application de liant, par exemple par pulvérisation d'un liant liquide et/ou projection d'un liant sous forme de poudre, sur la surface d'application et/ou sur les fibres préalablement drapées. La préforme comprend moins de 10% en poids de liant, de préférence moins de 5% en poids de liant.

Selon un mode de réalisation, les filaments non tissés sont formés à partir d'au moins un troisième polymère, ladite étape d'imprégnation étant alors effectuée à une température inférieure à la température de fusion, et de préférence supérieure à la température de transition vitreuse dudit troisième polymère, de sorte que les filaments assurent un bon maintien des fibres de la préforme lors de l'étape d'imprégnation, notamment sa tenue mécanique au délaminage.

Le premier polymère constituant un liant, l'éventuel deuxième polymère et l'éventuel troisième polymère peuvent être différents ou identiques ou de même famille.

Selon un mode de réalisation, le troisième polymère formant le liant et/ou le deuxième polymère formant les filaments est un polymère thermoplastique, de préférence choisi dans le groupe constitué par les polyamides, notamment les polyamides aromatiques (aramides), polyesters tels que le polyéthylène téréphtalate, polyéthersulfones, polyétheréthercétones, polysulfures de phénylène, polyuréthanes, époxydes, polyoléfines, acide polylactique, polyacryliques, et leurs mélanges.

Dans le cas de polymère thermodurcissable, le premier polymère constituant un liant, l'éventuel deuxième polymère et le troisième polymère sont par exemple choisis dans le groupe constitué par les époxydes, polyesters, vinylesters, phénoliques, polyimides, bismaléimides, et leurs mélanges.

Le quatrième polymère d'imprégnation est différent du premier polymère constituant un liant, l'éventuel deuxième polymère et l'éventuel troisième polymère, et est de préférence choisi dans les groupes de polymères précités.

Le premier polymère, lorsqu'il forme la matrice, est différent des éventuels deuxième polymère et troisième polymère lorsqu'ils sont présents, et est de préférence choisi dans les groupes de polymères précités.

Selon d'autres modes de réalisation, les filaments non tissés appliqués sur la préforme sont des fibres minérales, notamment des fibres céramiques telles que des fibres de verre, des fibres de carbone, ou des fibres métalliques, les filaments permettant de renforcer la préforme ainsi que la pièce finale dans l'épaisseur.

Selon un mode de réalisation, la préforme est obtenue par un procédé de placement de fibres, connu en soi. Selon un mode de réalisation, la réalisation de chaque sous-ensemble de plis comprend la réalisation de plis superposés, par application au contact, au moyen d'un rouleau d'application, de fibres continues, de préférence unidirectionnelles, chaque pli étant réalisé par application d'une ou plusieurs bandes selon une orientation sur l'outillage de drapage ou sur des bandes du pli précédent ou sur un sous-ensemble de plis aiguilleté, chaque bande étant formée d'une ou plusieurs fibres continues.

Le placement de fibres est avantageusement automatisé au moyen d'une tête de placement de fibres, connue en soi, comportant un rouleau de compactage destiné à venir en contact contre l'outillage pour appliquer une bande formée d'une ou plusieurs fibres plates continues, et un système de guidage pour guider la ou les fibres sur ledit rouleau, par déplacement relatif de la tête d'application par rapport à la surface de drapage selon différentes trajectoires.

Lesdites fibres continues se présentent de préférence sous la forme de fibres continues unidirectionnelles plates, classiquement appelées mèches, comprenant une multitude de filaments. Les fibres présentent par exemple des largeurs d'un huitième de pouce (0, 3175 cm), un quart de pouce (0,635 cm) ou un demi-pouce (1,27 cm) (1/8", 1/4" ou 1/2"). Dans la présente, le terme «fibres» désigne également des fibres de plus grande largeur, supérieure à 1/2 pouce (1,27 cm), classiquement appelée bande dans la technologie du placement.

En variante, les fibres peuvent être fixées sur le moule, par exemple mécaniquement ou par collage, uniquement en début et en fin de trajectoire, le rouleau étant de préférence en contact en début et en fin de trajectoire, et éventuellement à distance de la surface sur le reste de la trajectoire.

Selon d'autres modes de réalisation, l'aiguilletage selon l'invention est utilisé en remplacement de l'opération de couture effectuée lors de la fabrication d'un tissu multiaxial NCF, chaque sous-ensemble de plis comprend alors plusieurs plis superposés, sans liant, l'aiguilletage des filaments appliqués sur le sous-ensemble de plis est par exemple réalisé en maintenant mécaniquement les fibres des plis, par exemple par des systèmes de picots autour desquels les fibres passent. La préforme aiguilletée résultante est alors soumise à une opération d'imprégnation pour former la pièce en matériau composite.

Selon un mode de réalisation, le procédé comprend une étape de thermoformage de la préforme aiguilletée, de préférence entre l'outillage de formage mâle et l'outillage de formage femelle d'une presse, pour obtenir une préforme tridimensionnelle. En variante, le formage est réalisé au moyen d'une bâche à vide, après positionnement de la préforme sur un outillage de formage

Dans le cas de filaments en un troisième polymère, le thermoformage est réalisé à une température de thermoformage inférieure à la température de fusion du troisième polymère, et de préférence supérieure à la température de transition vitreuse du troisième polymère.

Dans le cas d'une préforme sèche avec un liant formé du premier polymère, la préforme tridimensionnelle obtenue après le thermoformage est soumise à l'étape d'imprégnation.

Le formage est de préférence réalisé à une température de formage inférieure à la température de fusion du premier polymère formant la matrice, du premier polymère formant le liant ou du deuxième polymère, et de préférence supérieure à la température de transition vitreuse dudit premier ou deuxième polymère. Le formage est réalisé à chaud, la préforme initiale étant chauffée à une température de formage avant et/ou pendant le formage afin d'augmenter la formabilité de la préforme. La préforme initiale peut être préchauffée avant le formage par passage dans un four ou tunnel et/ou la préforme peut-être chauffée lors du formage, par exemple par chauffage de l'outillage de formage mâle et/ou l'outillage de formage femelle. De préférence, la préforme est uniquement préchauffée par passage dans un four ou tunnel, les outillages de la presse n'étant pas chauffés, simplifiant ainsi les outillages de presse.

En l'absence d'aiguilletage, la déformation de la préforme lors du formage s'effectue fibre par fibre. L'opération d'aiguilletage de la préforme selon l'invention préalablement à l'opération de formage permet d'obtenir une déformation homogène de la préforme, du fait du glissement des filaments aiguilletés.

Par ailleurs, les filaments du feutre présents sur chaque face principale de la préforme permettent un glissement de la préforme dans la presse sans adhérence. Les filaments extérieurs stabilisent les surfaces extérieures de la préforme en limitant, voire supprimant, les déformations locales de la préforme et assurent ainsi une déformation homogène des fibres de la préforme. Le procédé selon l'invention permet ainsi de favoriser les mécanismes de glissement entre les outillages de formage et la préforme, et ainsi de limiter, voire supprimer, les défauts de fibres des plis externes des préformes résultant des frictions entre la préforme et les outillages de formage dans les procédés de formage antérieurs.

La densité d'aiguilletage est définie notamment en fonction de la perméabilité et de la stabilisation recherchées, et du type d'aiguille utilisée. Selon un mode de réalisation, la densité d'aiguilletage lors de chaque étape d'aiguilletage est comprise entre 10 et 350 coups/cm². Dans le cas d'un dispositif d'aiguilletage muni d'aiguilles à fourche, la densité d'aiguilletage est de préférence de 150 à 350 coups/cm², mieux encore de 200 à 300 coups/cm². Dans le cas d'un dispositif d'aiguilletage muni d'aiguilles à barbes, comprenant chacune plusieurs encoches, la densité d'aiguilletage est de préférence de 10 à 100 coups/cm², mieux encore de 40 à 60 coups/cm².

La partie travaillante des aiguilles a de préférence un diamètre compris entre 0,30 et 0,60 mm, de préférence entre 0,40 et 0,50 mm (jauges de 38 à 42).

La largeur et/ou la profondeur des encoches, de préférence la largeur et la profondeur des encoches, sont comprises entre 0,03 et 0,1 mm, de préférence entre 0,04 et 0,06 mm.

La longueur des filaments est définie en fonction de l'épaisseur des sous-ensembles, de préférence de sorte que les filaments aiguilletés traversent chaque sous-ensemble. Par ailleurs, les filaments aiguilletés doivent de préférence être suffisamment longs pour rester entremêlés sur la première face de chaque sous-ensemble.

Selon un mode de réalisation, les filaments ont une longueur comprise entre 10 et 100 mm, de préférence entre 40 et 60 mm, et un diamètre compris entre 5 et 50 µm, de préférence 10 à 35 µm.

Selon un mode de réalisation, l'aiguilletage est réalisé de sorte que des filaments transférés par les aiguilles dépassent de la deuxième face principale du sous-ensemble qui est opposée à la première face principale sur laquelle les filaments ont été appliqués, sur une longueur comprise entre 1 et 10 mm, de préférence de 2 à 6 mm, certain de ces filaments pouvant former des boucles dépassant de la deuxième face de la préforme.

De préférence, tel que décrit dans la demande de brevet FR17/70898, déposée le 4 septembre 2017, lors de l'aiguilletage, les aiguilles et les sous-ensembles de plis sont disposées de sorte que les axes d'encoche forment un angle non nul avec la ou les orientations de fibres continues. On effectue ainsi un aiguilletage orienté de chaque sous-ensemble, en définissant l'orientation des aiguilles par rapport aux orientations de fibre des sous-ensembles, de sorte que les fibres continues ne sont pas ou peu entraînées ou endommagées par les aiguilles, réduisant ainsi les risques de détérioration de la préforme et garantissant des propriétés mécaniques optimales de la pièce finale obtenue avec la préforme.

Selon un mode de réalisation, chaque application de filaments non tissés sur un sous-ensemble de plis comprend l'application d'un voile ou feutre non tissé formé desdits filaments non tissés.

Les feutres utilisés peuvent être isotropes, avec des filaments orientés de manière aléatoire, ou des feutres orientés avec des filaments présentant une orientation préférentielle. Dans le cas de feutres orientés, les aiguilles, et plus particulièrement leurs axes d'encoche, sont disposées en fonction de l'orientation des filaments de manière à optimiser le taux de prise de filaments par les aiguilles, les axes d'encoche formant de préférence un angle nul avec l'orientation préférentielle des filaments du feutre. Selon un mode de réalisation, le feutre présente une masse surfacique de 5 à 100 g/m², et/ou la préforme munie de filaments comprend de 1 à 10% en poids de filaments, de préférence de 2 à 5% en poids de filaments.

Une partie des filaments du feutre est transférée à travers la préforme, les filaments non transférés présents sur la première face principale peuvent être retirés par pelage du feutre ou non.

Selon un mode de réalisation, le reste de feutre est maintenu sur le sous-ensemble de plis aiguilleté, la structure non tissée des feutres augmente la perméabilité de la préforme et permet ainsi de favoriser l'infusion et/ou injection, les feutres conférant un effet drainant, plus particulièrement dans le cas d'une infusion. Les feutres peuvent en outre augmenter la tenue au choc de la préforme et/ou améliorer l'aspect de surface de la préforme.

L'invention a également pour objet une préforme aiguilletée telle qu'obtenue selon procédé décrit précédemment, avant l'opération de traitement, ainsi qu'une pièce en matériau composite telle qu'obtenue selon le procédé décrit précédemment.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- les figures 1A et 1B illustrent de manière schématique un procédé de réalisation d'une préforme aiguilletée selon un premier mode de réalisation de l'invention, la figure 1A illustrant la réalisation d'un sous-ensemble de plis aiguilleté, et la figure 1B illustrant la réalisation d'une préforme aiguilletée à partir de sous-ensembles de plis aiguilletés ;
- la figure 2 est une vue schématique de côté illustrant l'opération de drapage d'un sous-ensemble de plis ;
- la figure 3 est une vue schématique de côté illustrant l'opération d'aiguilletage d'un feutre de fibres non tissé appliqué sur un sous-ensemble de plis ;
- la figure 4 illustre de manière schématique un procédé de réalisation d'une préforme aiguilletée selon un deuxième mode de réalisation de l'invention ;
- la figure 5 illustre de manière schématique une opération de formage d'une préforme aiguilletée à épaisseur variable selon l'invention ; et,
- la figure 6 est une vue schématique de côté d'une préforme aiguilletée à épaisseur selon l'invention.

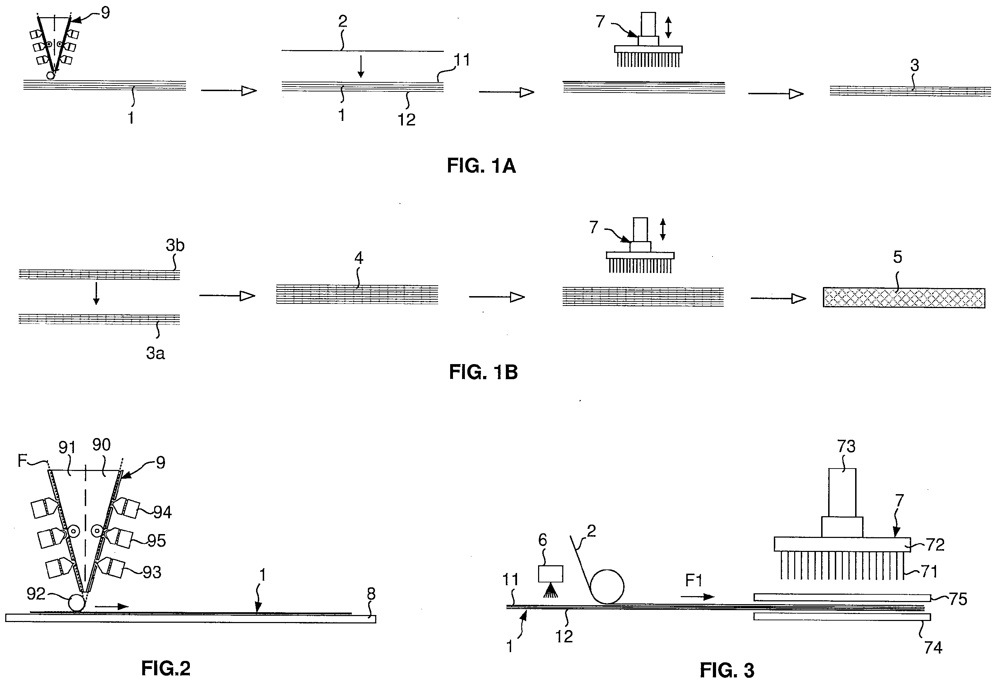

Les figures 1A et 1B illustrent un premier mode de réalisation d'une préforme aiguilletée, dans lequel des sous-ensembles de plis aiguilletés sont dans un premier temps réalisé, puis des sous-ensembles de plis aiguilletés sont ensuite empilés pour former une préforme aiguilletée.

Pour la réalisation d'un sous-ensemble de plis aiguilleté, des plis de fibres continues unidirectionnelles sont drapés à plat sur un outillage de drapage afin de réaliser un sous-ensemble 1 formé de plis superposés, présentant deux faces principales opposées 11, 12. Après réalisation du sous-ensemble de plis 1, un feutre 2 de fibres ou filaments non-tissés est appliqué sur une première face principale 11 du sous-ensemble de plis, et le sous-ensemble de plis ainsi muni du feutre est soumis à une opération d'aiguilletage, par passage dans un dispositif d'aiguilletage ou aiguilleteuse 7, pour former un sous-ensemble de plis aiguilleté 3.

En référence à la figure 2, le drapage est effectué au moyen d'un dispositif de drapage 9 comprenant une tête 90 de placement de fibres, connue en soi, permettant le drapage automatique au contact de bandes formées d'une ou plusieurs fibres. Les fibres F entrent dans la tête 90 sous la forme de deux nappes de fibres, et la tête comprend un système de guidage 91 permettant de guider les fibres vers le rouleau de compactage 92 sous la forme d'une bande de fibres dans laquelle les fibres sont disposées côte à côte, par exemple sensiblement bord à bord. La tête comprend, de part et d'autre du système de guidage, des moyens de coupe 93 pour couper individuellement chaque fibre passant dans le système de guidage, des moyens de blocage 94 pour bloquer chaque fibre venant d'être coupée, et des moyens de réacheminement 95 pour entraîner individuellement chaque fibre, ceci afin de pouvoir à tout moment stopper et reprendre l'application d'une fibre, ainsi que choisir la largeur de la bande. Le drapage d'une bande est réalisé par déplacement relatif de la tête par rapport à la surface de drapage sensiblement plane de l'outillage de drapage 8. La tête comprend par exemple une structure support (non représentée) sur laquelle est monté le système de guidage et par laquelle la tête peut être assemblée à un système de déplacement, apte à déplacer la tête selon au moins deux directions perpendiculaires l'une à l'autre. La tête est par exemple prévue pour recevoir huit fibres, et permettre l'application de bandes de 1 à 8 fibres de 6,35 mm (1/4 de pouce) de large.

La tête est ici utilisée pour la réalisation de sous-ensembles de plis 1 à partir de fibres sèches munies d'un liant classiquement appelé « binder », pour conférer un caractère collant aux fibres lors du drapage et assurer la cohésion de chaque sous-ensemble de plis. Le liant, constitué d'un polymère, peut être appliqué sur les fibres avant le drapage, par exemple sous la forme de voile et/ou de poudre, des bobines de fibres pré-munies de liant étant alors chargées dans la machine de placement de fibre. Le liant peut être appliqué en ligne, lors du drapage des fibres, par exemple directement sur les fibres à draper, par exemple sous forme de filaments, tel que décrit dans la demande de brevet français n°16 70088, déposée le 7 mars 2016.

Dans le cas notamment de fibres pré-munies de liant, la tête 90 est de préférence équipée d'un système de chauffage (non représenté), par exemple de type lampe IR ou laser, afin de chauffer le liant en cours d'application des fibres, et ainsi permettre au moins une adhésion des fibres des différents plis. Le système de chauffage chauffe les fibres avant leur application sur la surface d'application, ainsi que la surface d'application ou les fibres préalablement déposées, en amont du rouleau par rapport à la direction d'avancement de la tête.

Les fibres sont par exemple des fibres de carbone, plates continues, de type mèches, comprenant une multitude de fils ou filaments de carbone, avec un liant thermoplastique présent en quantité de l'ordre de 2% en poids.

En référence à la figure 3, l'opération d'aiguilletage du sous-ensemble de plis est effectuée au moyen d'une aiguilleteuse 7, connue en soi pour consolider des nappes de fibres, qui comprend une pluralité d'aiguilles 71 montées sur un support 72 ou planche à aiguilles, apte à être animée, par des moyens 73 appropriés, d'un mouvement de va-et-vient dans une direction parallèle aux aiguilles. L'aiguilleteuse comprend une table support 74 ajourée disposée en vis à vis des aiguilles et destinée à supporter le sous-ensemble de plis, ainsi qu'un débourreur ou dévêtisseur 75 placé entre la table support et les aiguilles, muni de trous traversant pour le passage des aiguilles. La table support comprend également un ensemble de trous pour permettre le passage des aiguilles après qu'elles aient traversé la préforme.

L'aiguilleteuse est équipée ici d'aiguilles 71 dites à fourche, chaque aiguille comprenant à l'extrémité de sa portion distale ou partie travaillante une encoche, de sorte que l'aiguille entraine les filaments uniquement lors de la phase de pénétration, soit de haut en bas sur la figure 3. L'encoche est définie entre une paroi de fond et deux parois latérales et présente un axe d'encoche, disposé parallèlement auxdites parois et perpendiculairement à l'axe longitudinal de l'aiguille.

Pendant l'aiguilletage, le sous-ensemble 1 est entraîné positivement dans le sens de la flèche référencée F1, et les aiguilles sont entrainées en va et vient. Lors du déplacement des aiguilles vers le bas, des fibres du feutre se positionnent dans les encoches des aiguilles et sont entrainées au travers de toute l'épaisseur du sous-ensemble, les filaments ressortant sur la deuxième face principale 12. La densité d'aiguilletage est définie en fonction de la fréquence du mouvement en va-et-vient des aiguilles, le nombre d'aiguilles, et la vitesse d'avancement du sous-ensemble dans l'aiguilleteuse.

De préférence, avant l'opération d'aiguilletage, un agent lubrifiant, également appelé agent de lubrification, est appliqué sur le sous-ensemble. L'agent lubrifiant comprend de l'eau et est appliqué sur le sous-ensemble par un système de pulvérisation 6. Lors de l'aiguilletage, l'eau présente dans le sous-ensemble en tant qu'agent lubrifiant permet de réduire les frottements entre les aiguilles et ainsi de réduire l'échauffement du sous-ensemble, ce qui garantit un transfert efficace des filaments du feutre à travers le sous-ensemble, limite la casse des fibres, et permet de piéger dans le sous-ensemble les éventuelles fibrilles résultant de la casse de fibres.

Après l'aiguilletage, le sous-ensemble de plis aiguilleté 3 est avantageusement soumis à une opération de séchage afin de réduire sa teneur en eau ou supprimer toute trace d'eau. Cette opération de séchage est par exemple réalisée en plaçant le sous-ensemble dans une étuve. Des sous-ensembles de plis 3 sont ensuite empilés les uns sur les autres pour former une préforme aiguilletée 5 présentant l'empilement de plis souhaité. Les sous-ensembles de plis empilés peuvent être identiques, ou formés d'une superposition différente de plis, chaque sous-ensemble pouvant être formé de plis d'orientation identiques ou différentes. Dans l'exemple illustré, la préforme aiguilletée 4 est formée par l'empilement de deux sous-ensembles de plis, référencés 3a et 3b.

Selon un mode de réalisation, tel qu'illustré sur la figure 1B, après application d'un deuxième sous-ensemble de plis 3b aiguilleté sur un premier sous-ensemble de plis aiguilleté 3a, l'empilement résultant 4 peut être soumis à une opération d'aiguilletage pour aiguilleter les filaments présents sur la première face 11 du deuxième sous-ensemble 3b qui n'ont pas été aiguilletés. Lors de cet aiguilletage, les filaments sont transférés à travers les plis du deuxième sous-ensemble ainsi que sur une partie des plis du premier sous-ensemble, de sorte que les deux sous-ensembles soient assemblés l'un à l'autre. Dans ce mode de réalisation, les sous-ensembles de plis ne sont pas soumis à l'étape de séchage précitée, l'opération de séchage étant effectuée sur la préforme aiguilletée résultante.

Afin d'obtenir des sous-ensembles de plis aiguilletés présentant des densités d'aiguilletage similaire, le deuxième sous-ensemble de plis est aiguilleté à une densité d'aiguilletage plus faible que le premier sous-ensemble de plis. L'aiguilletage pour assembler les deux sous-ensembles est réalisé de sorte que la densité d'aiguilletage du deuxième sous-ensemble de plis aiguilleté corresponde sensiblement à celle du premier sous-ensemble de plis aiguilleté.

Selon une variante de réalisation, un nouveau feutre de filaments non tissés est ajouté sur l'empilement pour effectuer cet aiguillage pour assembler les sous-ensembles de plis.

Cet aiguilletage pour assembler deux sous-ensembles peut être effectué de manière uniforme sur toute la surface de l'empilement, ou en variante dans des endroits localisés pour relier les deux sous-ensembles uniquement au niveau de zone d'assemblage.

Dans le cas d'une préforme aiguilletée formée de plus de deux sous-ensembles, une opération d'aiguillage est effectuée après positionnement de chaque nouveau sous-ensemble sur l'empilement.

Selon une variante de réalisation, les filaments ne sont pas appliqués sous la forme d'un feutre, mais projetés de manière aléatoire sur les sous-ensembles de plis 1 ainsi que, le cas échéant, sur l'empilement 4.

La préforme aiguilletée 5 peut ensuite être soumise à une opération d'ajout ou d'imprégnation d'un polymère d'imprégnation, thermodurcissable ou thermoplastique, par un procédé d'injection et/ou infusion. La préforme aiguilletée est par exemple placée dans un moule d'injection, entre la partie mâle et la partie femelle dudit moule, un polymère d'imprégnation est injecté sous pression dans la préforme, selon un procédé de type RTM (Resin Transfer Moulding), ou Gap-RTM. La pièce composite obtenue à l'issue de cette étape d'imprégnation peut être soumise à une opération de détourage.

Préalablement à cette étape d'imprégnation, la préforme aiguilletée peut être soumise à une opération de formage, également appelée opération d'emboutissage, par exemple en positionnant la préforme entre l'outillage male et l'outillage femelle d'une presse. Le formage est réalisé à chaud, la préforme étant à une température de formage comprise entre la température de transition vitreuse et la température de fusion du polymère constituant le liant, et entre la température de transition vitreuse et la température de fusion du polymère formant les filaments du feutre. Cette température de formage de la préforme est obtenue par préchauffage de la préforme avant positionnement dans la presse et/ou par chauffage des deux outillages. Ce préchauffage est par exemple réalisé par passage de la préforme initiale entre les rampes de lampe infrarouge supérieure et inférieure d'un four ou tunnel de préchauffage. De préférence, lors du formage, la préforme est maintenue sous tension par un système de mise sous tension, par exemple de type serre-flan. Les outillages sont ensuite écartés l'un de l'autre en position ouverte pour pouvoir démouler de la presse la préforme aiguilletée tridimensionnelle résultante.

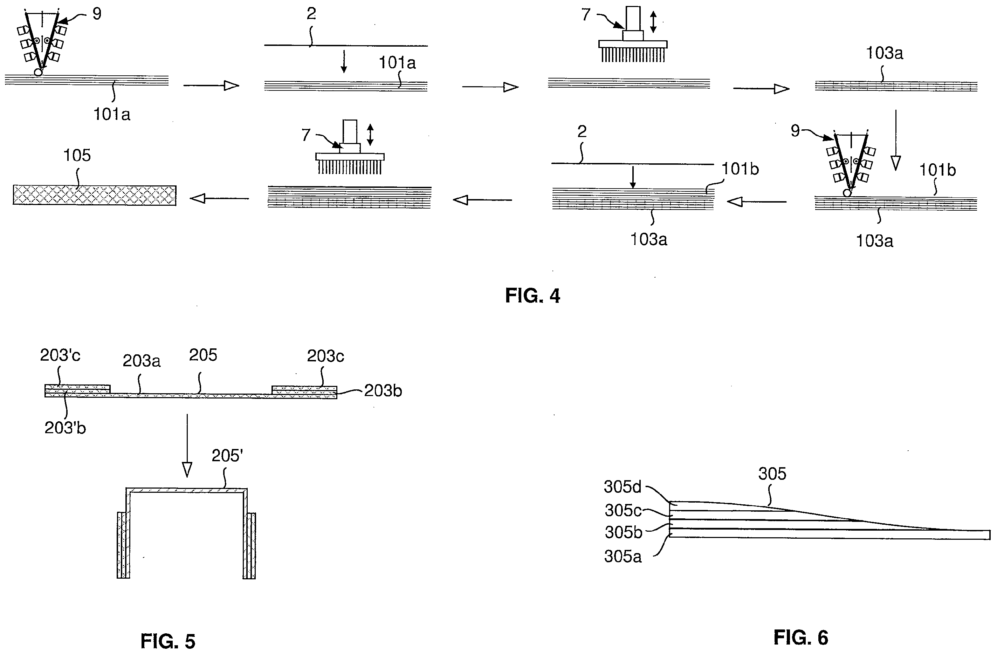

La figure 4 illustre de manière schématique un deuxième mode de réalisation d'une préforme aiguilletée. Un premier sous-ensemble de plis 101a est réalisé comme précédemment par drapage au moyen d'une tête de placement de fibres. Un feutre 2 de filaments non tissés est placé sur le sous-ensemble de plis et est aiguilleté au moyen d'un aiguilleteuse pour former comme précédemment un premier sous-ensemble de plis aiguilleté 103a. Un deuxième sous-ensemble de plis 101b est ensuite drapé directement sur le premier sous-ensemble de plis aiguilleté 103a au moyen d'une tête de placement de fibres. Un feutre 2 de filaments non tissés est ensuite appliqué sur le deuxième sous-ensemble de plis et est aiguilleté pour former une préforme aiguilletée comprenant deux sous-ensembles de plis aiguilletés, cet aiguilletage étant effectué de sorte que les filaments assurent la liaison du deuxième sous-ensemble de plis au premier sous-ensemble de plis.

Selon ce mode de réalisation, dans le cas d'une préforme aiguilletée formée de plus de deux sous-ensembles de plis, chaque nouveau sous-ensemble est drapé directement sur le sous-ensemble aiguilleté précédent, et un feutre est appliqué sur le nouveau sous-ensemble de plis et est aiguilleté pour obtenir un nouveau sous-ensemble de plis aiguilleté assemblé au sous-ensemble de plis aiguilleté précédent.

La figure 5 illustre un exemple de préforme aiguillée 205 à épaisseur variable obtenue selon le procédé de l'invention. La préforme aiguilletée est formée d'un premier sous-ensemble de plis aiguilleté 203, d'un deuxième sous-ensemble de plis aiguilleté 203b, de plus petites dimensions, disposé sur le premier sous-ensemble de plis aiguilleté, le long d'un premier bord longitudinal de ce dernier, d'un troisième sous-ensemble de plis aiguilleté 203'b, identique au deuxième sous-ensemble, disposé sur le premier sous-ensemble le long de son deuxième bord longitudinal, et d'un quatrième et cinquième sous-ensembles de plis aiguilletés 203c, 203'c identiques, disposés respectivement sur le deuxième et troisième sous-ensembles de plis, de même dimensions que ces derniers. La préforme aiguilletée 205 est soumise ensuite à une opération de formage de manière à obtenir une préforme aiguilletée tridimensionnelle de section en U, présentant une base formée du premier sous-ensemble de plis aiguilleté et de deux branches d'épaisseur plus importante, chacune formée de trois sous-ensembles de plis.

La figure 6 illustre un deuxième exemple de préforme aiguilletée d'épaisseur variable, formée d'un empilement de quatre sous-ensembles de plis aiguilletés 305a-305d, chaque sous-ensemble de plis aiguilleté recouvrant partiellement le sous-ensemble de plis aiguilleté précédent.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'inventior , telle que définie dans les revendications.

## Revendications

1. Procédé de réalisation d'une pièce en matériau composite comprenant des fibres continues et une matrice polymère, comprenant
- une étape de réalisation d'une préforme aiguilletée (5, 105, 205, 305) comprenant au moins deux sous-ensembles de plis aiguilletés (3a, 3b ; 103a) empilés l'un sur l'autre, chaque sous-ensemble de plis aiguilleté étant obtenu par aiguilletage de filaments non tissés appliqués sur au moins une première face principale d'un sous-ensemble de plis (1 ; 101a, 101b) superposés dans lequel chaque pli est formé de fibres continues, ledit aiguilletage étant réalisé au moyen d'un dispositif d'aiguilletage (7) comprenant une pluralité d'aiguilles (71), chaque aiguille étant munie d'une encoche, de sorte que des filaments soient entraînés par les aiguilles et disposés dans une direction sensiblement perpendiculaire aux fibres continues dudit sous-ensemble de plis, et
- une étape de traitement de la préforme aiguilletée pour former la matrice polymère de la pièce en matériau composite, tel que la réalisation de la préforme aiguilletée (5) comprend
- la réalisation d'un premier sous-ensemble de plis aiguilleté (3a), comprenant la réalisation d'un premier sous-ensemble de plis (1) superposés, l'application de filaments non tissés sur au moins une première face principale du premier sous-ensemble de plis et l'aiguilletage desdits filaments non tissés,
- la réalisation d'un deuxième sous-ensemble de plis aiguilleté (3b), comprenant la réalisation d'un deuxième sous-ensemble de plis superposés, l'application de filaments non tissés sur au moins une première face principale du deuxième sous-ensemble de plis et l'aiguilletage desdits filaments non tissés, et
- l'empilement du deuxième sous-ensemble de plis aiguilleté sur le premier sous-ensemble de plis aiguilleté, et l'aiguilletage de filaments non tissés de sorte que lesdits filaments soient entraînés à travers les fibres continues du deuxième sous-ensemble de plis, sur toute son épaisseur, ainsi qu'à travers les fibres continues du premier sous-ensemble de plis (1) sur uniquement une partie de l'épaisseur du premier sous-ensemble de plis,
ou
- la réalisation d'un premier sous-ensemble de plis aiguilleté (103a), comprenant la réalisation d'un premier sous-ensemble de plis superposés (101a), l'application de filaments non tissés sur au moins une première face principale du premier sous-ensemble de plis, et l'aiguilletage desdits filaments, et
- la réalisation d'un deuxième sous-ensemble de plis superposés (101b) sur le premier sous-ensemble de plis aiguilletés (103a), par application de plis directement sur le premier sous-ensemble de plis aiguilleté, l'application de filaments non tissés sur le deuxième sous-ensemble de plis, et l'aiguilletage desdits filaments de sorte que lesdits filaments soient entraînés à travers les fibres continues du deuxième sous-ensemble de plis, sur toute son épaisseur, ainsi qu'à travers les fibres continues du premier sous-ensemble de plis sur uniquement une partie de l'épaisseur du premier sous-ensemble de plis.

2. Procédé selon la revendication 1, **caractérisé en ce que** l'aiguilletage de filaments à travers les fibres continues d'un sous-ensemble de plis est effectué en présence d'un agent lubrifiant, pour réduire les frottements entre les aiguilles et les fibres continues.

3. Procédé selon la revendication 1 ou 2, **caractérisé en ce que** chaque aiguilletage est réalisé au moyen d'aiguilles à fourche présentant chacune à son extrémité distale au moins une encoche.

4. Procédé selon l'une des revendications 1 à 3, **caractérisé en ce qu'**il comprend la réalisation d'une préforme aiguilletée sèche, les plis de chaque sous-ensemble de plis étant formés à partir de fibres continues sèches, ledit procédé comprenant, après l'étape d'aiguilletage, une étape de traitement comprenant une étape d'imprégnation de la préforme aiguilletée sèche avec un polymère d'imprégnation formant la matrice polymère.

5. Procédé selon l'une des revendications 1 à 4, **caractérisé en ce que** la réalisation de chaque sous-ensemble de plis comprend la réalisation de plis superposés, par application au contact, au moyen d'un rouleau d'application (92), de fibres continues, chaque pli étant réalisé par application d'une ou plusieurs bandes selon une orientation, chaque bande étant formée d'une ou plusieurs fibres continues.

6. Procédé selon l'une des revendications 1 à 5, **caractérisé en ce que** chaque application de filaments sur un sous-ensemble de plis comprend l'application d'un feutre non tissé formé desdits filaments non tissés.

## Patentansprüche

1. Verfahren zum Herstellen eines Teils aus Verbundmaterial, umfassend Endlosfasern und eine Polymermatrix, umfassend
- einen Schritt des Herstellens einer Nadelvorform (5, 105, 205, 305), die mindestens zwei aufeinander gestapelte Untergruppen von Nadelfalten (3a, 3b; 103a) umfasst, wobei jede Untergruppe von Nadelfalten durch Nadeln von nicht gewebten Filamenten erhalten wird, die auf mindestens eine erste Hauptseite einer Untergruppe von übereinanderliegenden Falten (1; 101a, 101b) aufgetragen werden, wobei jede Falte aus Endlosfasern gebildet ist, wobei das Nadeln mittels einer Nadelvorrichtung (7) ausgeführt wird, die eine Vielzahl von Nadeln (71) umfasst, wobei jede Nadel mit einer Kerbe versehen ist, so dass Filamente von den Nadeln angetrieben und in einer im Wesentlichen senkrechten Richtung zu den Endlosfasern der Untergruppe von Falten angeordnet sind, und
- einen Schritt des Verarbeitens der Nadelvorform zum Bilden der Polymermatrix des Verbundwerkstoffteils, wobei das Herstellen der Nadelvorform (5) umfasst
- das Herstellen einer ersten Untergruppe von Nadelfalten (3a), umfassend das Herstellen einer ersten Untergruppe von übereinanderliegenden Falten (1), das Auftragen von nicht gewebten Filamenten auf mindestens eine erste Hauptseite der ersten Untergruppe von Falten und das Nadeln der nicht gewebten Filamente,
- das Herstellen einer zweiten Untergruppe von Nadelfalten (3b), umfassend das Herstellen einer zweiten Untergruppe von übereinanderliegenden Falten, das Auftragen von nicht gewebten Filamenten auf mindestens eine erste Hauptseite der zweiten Untergruppe von Falten und das Nadeln der nicht gewebten Filamente, und
- das Stapeln der zweiten Untergruppe von Nadelfalten auf der ersten Untergruppe von Nadelfalten und Nadeln von nicht gewebten Filamenten, so dass die Filamente über die gesamte Dicke durch die Endlosfasern der zweiten Untergruppe von Falten sowie über nur einen Teil der Dicke der ersten Untergruppe von Falten durch die Endlosfasern der ersten Untergruppe von Falten (1) gezogen werden, oder
- das Herstellen einer ersten Untergruppe von Nadelfalten (103a), umfassend das Herstellen einer ersten Untergruppe von übereinanderliegenden Falten (101a), das Auftragen von nicht gewebten Filamenten auf mindestens eine erste Hauptseite der ersten Untergruppe von Falten und das Nadeln der Filamente, und
- das Herstellen einer zweiten Untergruppe von übereinanderliegenden Falten (101b) an der ersten Untergruppe von Nadelfalten (103a), durch Auftragen von Falten direkt an der ersten Untergruppe von Nadelfalten, Auftragen von nicht gewebten Filamenten an der zweiten Untergruppe von Falten, und Nadeln der Filamente, so dass die Filamente über ihre gesamte Dicke durch die Endlosfasern der zweiten Untergruppe von Falten gezogen werden, sowie durch die Endlosfasern der ersten Unterbaugruppe von Falten über nur einen Teil der Dicke der ersten Unterbaugruppe von Falten.

2. Verfahren nach Anspruch 1, **dadurch gekennzeichnet, dass** das Nadeln von Filamenten durch die Endlosfasern einer Untergruppe von Falten in Gegenwart eines Schmiermittels durchgeführt wird, um die Reibung zwischen den Nadeln und den Endlosfasern zu reduzieren.

3. Verfahren nach Anspruch 1 oder 2, **dadurch gekennzeichnet, dass** jedes Nadeln mittels Gabelnadeln ausgeführt wird, die jeweils an ihrem distalen Ende mindestens eine Kerbe besitzen.

4. Verfahren nach einem der Ansprüche 1 bis 3, **dadurch gekennzeichnet, dass** es das Herstellen einer trockenen Nadelvorform umfasst, wobei die Falten jeder Untergruppe von Falten aus trockenen Endlosfasern gebildet sind, wobei das Verfahren nach dem Nadelschritt einen Verarbeitungsschritt umfasst, der einen Schritt der Imprägnierung der trockenen Nadelvorform mit einem Imprägnierpolymer umfasst, das die Polymermatrix bildet.

5. Verfahren nach einem der Ansprüche 1 bis 4, **dadurch gekennzeichnet, dass** das Herstellen jeder Untergruppe von Falten das Herstellen übereinanderliegender Falten durch Kontaktanwendung mittels einer Anlegerolle (92) von Endlosfasern umfasst, wobei jede Falte durch Anwendung eines oder mehrerer Streifen in einer Ausrichtung hergestellt wird, wobei jeder Streifen aus einer oder mehreren Endlosfasern gebildet ist.

6. Verfahren nach einem der Ansprüche 1 bis 5, **dadurch gekennzeichnet, dass** jedes Auftragen von Filamenten auf eine Untergruppe von Falten das Auftragen eines nicht gewebten Filzes umfasst, der aus den nicht gewebten Filamenten gebildet ist.

## Claims

1. Method for producing a composite material part comprising continuous fibres and a polymer matrix, comprising
- a step of producing a needled preform (5, 105, 205, 305) comprising at least two sub-sets of needled plies (3a, 3b; 103a) stacked one on top of the other, each sub-set of needled plies being obtained by needling nonwoven filaments applied to at least a first main face of a sub-set of plies (1; 101a, 101b) superimposed on one another, in which each ply is formed of continuous fibres, said needling being carried out by means of a needling device (7) comprising a plurality of needles (71), each needle being provided with a notch, so that filaments are drawn by the needles and arranged in a direction substantially perpendicular to the continuous fibres of said sub-set of plies, and
- a step of treating the needled preform to form the polymer matrix of the composite material part,
such that the production of the needled preform (5) comprises
- the production of a first sub-set of needled plies (3a), comprising the production of a first sub-set of superimposed plies (1), the application of nonwoven filaments to at least a first main face of the first sub-set of plies and the needling of said nonwoven filaments,
- the production of a second sub-set of needled plies (3b), comprising the production of a second sub-set of superimposed plies, the application of nonwoven filaments to at least a first main face of the second sub-set of plies, and the needling of said nonwoven filaments, and
- stacking the second sub-set of needled plies on top of the first sub-set of needled plies, and needling nonwoven filaments so that said filaments are drawn through the continuous fibres of the second sub-set of plies, over its entire thickness, as well as through the continuous fibres of the first sub-set of plies (1) over only a portion of the thickness of the first sub-set of plies,
or
- producing a first sub-set of needled plies (103a), comprising producing a first sub-set of superimposed plies (101a), applying nonwoven filaments to at least a first main face of the first sub-set of plies, and needling said filaments, and
- creating a second sub-set of superimposed plies (101b) on the first sub-set of needled plies (103a) by applying plies directly to the first sub-set of needled plies, applying nonwoven filaments to the second sub-set of plies, and needling said filaments so that said filaments are drawn through the continuous fibres of the second sub-set of plies, over its entire thickness, as well as through the continuous fibres of the first sub-set of plies over only a portion of the thickness of the first sub-set of plies.

2. Method according to claim 1, **characterized in that** the needling of filaments through the continuous fibres of a sub-set of plies is carried out in the presence of a lubricating agent, to reduce friction between the needles and the continuous fibres.

3. Method according to claim 1 or 2, **characterized in that** each needling is performed using forked needles, each having at least one notch at its distal end.

4. Method according to one of claims 1 to 3, **characterized in that** it comprises producing a dry needled preform, the plies of each sub-set of plies being formed from dry continuous fibres, said method comprising, after the needling step, a treatment step comprising a step of impregnating the dry needled preform with an impregnating polymer forming the polymer matrix.

5. Method according to one of claims 1 to 4, **characterized in that** the production of each sub-set of plies comprises the production of superimposed plies by applying by contact, by means of an application roller (92), continuous fibres, each ply being produced by applying one or more bands in a given orientation, each band being formed of one or more continuous fibres.

6. Method according to one of claims 1 to 5, **characterized in that** each application of filaments to a sub-set of plies comprises the application of a nonwoven felt formed from said nonwoven filaments.
